# EUROPÄISCHE PATENTSCHRIFT

(11) **EP 2 678 184 B1**
(45) Veröffentlichungstag und Bekanntmachung des Hinweises auf die Patenterteilung: **30.07.2014**
(21) Anmeldenummer: 12705648.9
(22) Anmeldetag: 16.02.2012
(51) Int. Cl.: B60L 9/30, B60L 11/18, B60L 7/20, B61C 5/00, B60L 7/14, B60L 11/08, F02B 63/04

(54) **ANORDNUNG UND VERFAHREN ZUM VERSORGEN VON ELEKTRISCHEN TRAKTIONSMOTOREN IN EINEM SCHIENENFAHRZEUG, INSBESONDERE IN EINEM ZUGVERBAND, MIT ELEKTRISCHER ENERGIE**
ASSEMBLY AND METHOD FOR SUPPLYING ELECTRICAL ENERGY TO ELECTRICAL TRACTION MOTORS IN A RAIL VEHICLE, IN PARTICULAR IN A TRAIN SET
SYSTÈME ET PROCÉDÉ D'ALIMENTATION EN ÉNERGIE ÉLECTRIQUE DE MOTEURS DE TRACTION ÉLECTRIQUES DANS UN VÉHICULE SUR RAILS, EN PARTICULIER DANS UN CONVOI

(30) Priorität: 23.02.2011 DE 102011012164
(43) Veröffentlichungstag der Anmeldung: 01.01.2014
(73) Patentinhaber: Bombardier Transportation GmbH, 10785 Berlin (DE)
(72) Erfinder: GERADTS, Karlheinz, 5603 Staufen AG (CH); DEGENHARDT, Andreas, 34346 Hannoversch Münden (DE)
(74) Vertreter: Patentanwälte Bressel und Partner mbB
(86) Internationale Anmeldenummer: PCT/EP2012/052705
(87) Internationale Veröffentlichungsnummer: WO 2012/113711

(56) Entgegenhaltungen:
- DE-A1-102007 060 893
- US-A1- 2002 079 149
- US-A1- 2004 251 691

## Beschreibung

Die Erfindung betrifft eine Anordnung und ein Verfahren zum Versorgen von elektrischen Traktionsmotoren in einem Schienenfahrzeug, insbesondere in einem Zugverband, mit elektrischer Energie. Insbesondere kann es sich bei dem Schienenfahrzeug um ein von einem dieselelektrischen Antriebsaggregat angetriebenes Triebfahrzeug handeln oder um ein Schienenfahrzeug, das Teil eines Zugverbandes ist, der durch ein dieselelektrisches Antriebsaggregat angetrieben wird.

Bei dieselelektrischen Antriebsaggregaten ist es üblich, die Traktionsmotoren und andere Verbraucher in dem Schienenfahrzeug oder Zugverband dadurch mit elektrischer Energie zu versorgen, dass ein Generator, der von dem Dieselmotor angetrieben wird, die elektrische Energie erzeugt, wobei der Generator an einen Gleichspannungs-Zwischenkreis angeschlossen ist. Für die Traktionsmotoren ist mindestens ein Traktions-Wechselrichter vorgesehen und für die anderen Verbraucher zumindest ein Verbraucher-Wechselrichter. Die Wechselrichter erzeugen aus der Gleichspannung des Zwischenkreises Wechselspannung bzw. Wechselstrom. Es ist jedoch auch möglich Gleichstrom-Traktionsmotoren und/oder andere Gleichstromverbraucher direkt, ohne Zwischenschaltung eines Wechselrichters an den Zwischenkreis anzuschließen.

Für die Verbraucher ist eine Verbraucherverbindung vorgesehen, die die elektrische Energie von dem Verbraucher-Wechselrichter oder direkt von dem Zwischenkreis zu dem Verbraucher oder zu den Verbrauchern überträgt. Bei der Verbraucherverbindung kann es sich insbesondere um eine Verbindung handeln, die eine so genannte Zugstrom-Sammelschiene aufweist. Daher handelt es sich bei den Verbrauchern insbesondere um solche, die nicht dem Antrieb des Schienenfahrzeugs oder des Zugverbandes dienen, sondern Funktionen wie Heizung, Licht und/oder Klimaanlage dienen. Z. B. weist die Anordnung den Teil einer Zugstrom-Sammelschiene auf, der in dem Triebfahrzeug (z. B. Lokomotive) eines Zugverbandes angeordnet ist.

Die Erfindung betrifft insbesondere Anordnungen bzw. Verfahren, die zuvor beschrieben wurden.

DE 101 03 538 B4 beschreibt ein elektromotorisch angetriebenes Schienenfahrzeug mit Verbrennungsmotor. Ein Generator-/Motorsystem gibt im Normalbetriebsfall (Traktion des Schienenfahrzeugs) eine 3-phasige Wechselspannung an einen Pulsgleichrichter aus, der einen Gleichspannungs-Zwischenkreis speist. Der Gleichspannungs-Zwischenkreis kann einen Gleichstrommotor oder über einen Wechselrichter einen oder mehrere Drehstromfahrmotoren speisen. Der Verbrennungsmotor und der Generator, der eine permanentmagneterregte oder fremderregte Synchronmaschine oder eine Asynchronmaschine sein kann, sind mechanisch miteinander gekoppelt. Beim Bremsen des elektromotorisch angetriebenen Schienenfahrzeugs arbeitet das Generator-/Motorsystem motorisch und es wird somit Bremsenergie in den Verbrennungsmotor eingeleitet.

Bremsenergie, die dem Verbrennungsmotor zugeführt wird, bewirkt eine Erhöhung der kinetischen Energie, d.h. der Drehzahl, und wird teilweise auch als Wärme abgeführt. Insbesondere wenn der Verbrennungsmotor unmittelbar vor dem Bremsen bereits mit hoher oder mittlerer Drehzahl läuft, kann er nur wenig Bremsenergie aufnehmen. Dies gilt auch dann, wenn der Bremsvorgang länger andauert. Die Dauerbremsleistung, die in den Verbrennungsmotor eingeleitet werden kann, ist gering.

US 2004/0251691 A1 beschreibt ein Hybrid-Energiesystem für den Antrieb von Fahrzeugen, z. B. Lokomotiven. Ein Verbrennungsmotor treibt einen Generator an, dessen erzeugte elektrische Energie gleichgerichtet wird und einem Umrichter zugeführt wird, um einen Dreiphasen-Wechselstrom einem Traktionsmotor des Fahrzeugs zuzuführen. Ein Energie-Managementsystem des Fahrzeugs steuert die Speicherung und Rückgewinnung von Energie aus einem Energiespeicher.

US 2002/0079149 A1 beschreibt ein Verfahren und ein System für ein Hybrid-Elektrofahrzeug. Ein Verbrennungsmotor ist über eine Kupplung mit einem Generator/Motor gekoppelt. Der Generator/Motor ist mechanisch mit einer Generator-Bremse verbunden und elektrisch mit einer Batterie verbunden. Ein Antriebsmotor des Fahrzeugs ist mechanisch mit einem Getriebe gekoppelt, mit dem auch der Generator/Motor gekoppelt ist. Der Antriebsmotor verstärkt die Leistung des Verbrennungsmotors, um die Räder des Fahrzeugs anzutreiben. Eine Fahrzeug-Systemsteuerung steuert mehrere Komponenten der Anordnung. Dadurch wird indirekt der Generator/Motor gesteuert. Es wird bestimmt, ob der Verbrennungsmotor bei Leerlaufbedingungen laufen sollte und zu welchem Zweck. Im Verlauf eines Antriebszyklus nimmt das Fahrzeug einen Leerlaufzustand ein, wenn entsprechende Bedingungen eintreten. Z. B. prüft das Fahrzeug auch eine niedrige Fahrzeuggeschwindigkeit. Die Fahrzeug-Systemsteuerung kann den Generator/Motor so ansteuern, dass er die Geschwindigkeit des Verbrennungsmotors bei einer typischen Geschwindigkeit steuert, die verwendet wird, wenn der Verbrennungsmotor während eines Fahrzeug-Leerlaufbetriebszustandes "Ein" ist.

Es ist eine Aufgabe der vorliegenden Erfindung, eine Anordnung und ein Verfahren zum Versorgen von elektrischen Traktionsmotoren in einem Schienenfahrzeug mit elektrischer Energie anzugeben, die einen energieeffizienten Betrieb des Schienenfahrzeugs ermöglichen.

Die beigefügten Patentansprüche definieren den Schutzumfang.

Gemäß einem Grundgedanken der vorliegenden Erfindung treibt der mit dem Verbrennungsmotor mechanisch gekoppelte Generator beim Bremsen den Verbrennungsmotor an, d.h. der Generator wird als Motor betrieben. Dabei läuft der Verbrennungsmotor mit einer Leerlaufdrehzahl. Es wird also nicht möglichst viel Bremsenergie von dem Generator in den Verbrennungsmotor eingeleitet, sondern es wird lediglich verhindert, dass der Verbrennungsmotor stoppt und dann bei Traktionsanforderung wieder aufwendig gestartet werden muss. Im Leerlauf benötigt der Verbrennungsmotor zwar wenig Kraftstoff, hat aber einen niedrigen Wirkungsgrad. Vorzugsweise wird die Kraftstoffzufuhr in Kraftstoff-Verbrennungsräume des Verbrennungsmotors sogar gesperrt, wenn der Verbrennungsmotor im motorischen Betrieb des Generators von dem Generator angetrieben wird. Dies kann von einer zentralen Steuerung der Anordnung, die nicht lediglich den Verbrennungsmotor steuert, oder von einer separaten Motorsteuerung bewirkt werden.

Unter einer Leerlaufdrehzahl wird eine Drehzahl des Verbrennungsmotors verstanden, bei der üblicherweise keine Traktion des Schienenfahrzeugs bewirkt wird, selbst wenn der Generator elektrische Energie erzeugt und in den Gleichspannungs-Zwischenkreis einspeist. Bei Leerlaufdrehzahl wird allenfalls von dem Generator elektrische Energie bei einer Leistung erzeugt, zur Deckung des Energiebedarfs der zusätzlichen Verbraucher, die nicht unmittelbar der Traktion dienen. Meist ist für Verbrennungsmotoren vom Hersteller des Motors eine Leerlaufdrehzahl oder ein Bereich von Leerlaufdrehzahlen vorgegeben. Insbesondere diese vorgegebene Leerlaufdrehzahl oder dieser vorgegebene Bereich von Leerlaufdrehzahlen kann auch gemäß der vorliegenden Erfindung für den motorischen Betrieb des Generators vorgegeben werden. Es ist jedoch auch denkbar, eine gegenüber der Vorgabe des Motorherstellers veränderte Leerlaufdrehzahl oder einen veränderten Leerlaufdrehzahlbereich vorzugeben, insbesondere bei geringeren Drehzahlwerten. Wenn der Verbrennungsmotor vom Generator angetrieben wird, wird der Verbrennungsmotor nicht unter Last gestellt. Es muss lediglich gewährleistet werden, dass der Verbrennungsmotor nicht zum Stillstand kommt. Dies wird durch den motorisch betriebenen Generator meist auch dann gewährleistet, wenn die Leerlaufdrehzahl niedrig gewählt ist.

Ein durch den Generator angetriebener Verbrennungsmotor bei Leerlaufdrehzahl hat den Vorteil, dass der Verbrennungsmotor geringem mechanischem Verschleiß ausgesetzt ist. Auch werden die Kühlsysteme des Verbrennungsmotors nicht benötigt oder gering belastet. Der Kraftstoffverbrauch ist sehr gering oder null.

Die Erfindung ist auch für Anordnungen mit mehr als einem Verbrennungsmotor geeignet, wobei z.B. mit jedem der Verbrennungsmotoren ein Generator gekoppelt ist, der bei Traktionsbetrieb von dem Verbrennungsmotor angetrieben wird, um elektrische Energie zu erzeugen, und der beim motorischen Betrieb des Generators den zugeordneten Verbrennungsmotor antreibt. Der motorische Betrieb des Generators kann stattfinden, wenn das Fahrzeug gebremst wird oder wenn die Anordnung von mehreren Verbrennungsmotoren lediglich im Teillastbetrieb betrieben wird, so dass lediglich ein Teil der Verbrennungsmotoren mechanische Energie erzeugen muss. Die anderen Verbrennungsmotoren können bei Leerlaufdrehzahl von dem zugeordneten Generator angetrieben werden.

Insbesondere wird vorgeschlagen: Eine Anordnung zum Versorgen von elektrischen Traktionsmotoren in einem Schienenfahrzeug, insbesondere in einem Zugverband, mit elektrischer Energie, wobei die Anordnung aufweist:
- zumindest einen Verbrennungsmotor,
- für den zumindest einen Verbrennungsmotor jeweils einen zugeordneten Generator zum Erzeugen der elektrischen Energie, wobei der Generator mechanisch mit dem Verbrennungsmotor gekoppelt ist, sodass er bei einem generatorischen Betrieb des Generators (insbesondere bei Traktionsbetrieb des zumindest einen Traktionsmotors) von dem Verbrennungsmotor angetrieben wird,

- einen Gleichrichter zum Gleichrichten eines von dem Generator erzeugten elektrischen Wechselstroms,
- einen Gleichspannungs-Zwischenkreis, der über den Gleichrichter elektrisch mit dem Generator verbunden ist,
- einen Generator-Wechselrichter, der zusätzlich zu dem Gleichrichter vorhanden ist oder der der im Wechselrichter-Betrieb betriebene Gleichrichter ist, wobei der Generator-Wechselrichter über den Gleichspannungs-Zwischenkreis mit dem Generator verbunden ist, um den Generator in einem motorischen Betrieb als Motor zu betreiben,
- eine Steuerung zum Steuern des motorischen Betriebs des Generators,
wobei die Steuerung einen Signaleingang aufweist, um ein Signal zu empfangen, das signalisiert, dass von dem Verbrennungsmotor keine Antriebsleistung gefordert wird,
wobei eine Leerlaufdrehzahl oder ein Bereich von Leerlaufdrehzahlen des Verbrennungsmotors vorgegeben ist und die Steuerung ausgestaltet ist, bei Empfang des Signals den motorischen Betrieb des Generators so zu steuern, dass der Verbrennungsmotor bei der vorgegebenen Leerlaufdrehzahl oder bei einer Leerlaufdrehzahl im Bereich der vorgegebenen Leerlaufdrehzahlen von dem Generator angetrieben wird, wobei der Generator über den Wechselrichter mit elektrischer Energie aus dem Gleichspannungs-Zwischenkreis versorgt wird.

Ferner wird vorgeschlagen: Ein Verfahren zum Versorgen von elektrischen Traktionsmotoren in einem Schienenfahrzeug, insbesondere in einem Zugverband, mit elektrischer Energie, wobei:
- zumindest ein Verbrennungsmotor in einem generatorischen Betrieb einen dem Verbrennungsmotor zugeordneten Generator antreibt, der Generator elektrische Energie erzeugt, die erzeugte elektrische Energie gleichgerichtet und in einen Gleichspannungs-Zwischenkreis eingespeist wird, aus dem der zumindest eine Traktionsmotor mit Traktionsenergie versorgt wird,
- in einem motorischen Betrieb des Generators der Generator elektrische Energie aus dem Gleichspannungs-Zwischenkreis bezieht und den Verbrennungsmotor antreibt,
- in dem motorischen Betrieb des Generators bei Empfang eines Signals, das signalisiert, dass von dem Verbrennungsmotor keine Antriebsleistung gefordert wird, der Generator so gesteuert wird, dass der Verbrennungsmotor bei einer vorgegebenen Leerlaufdrehzahl oder bei einer Leerlaufdrehzahl in einem vorgegebenen Bereich von Leerlaufdrehzahlen von dem Generator angetrieben wird.

Das Signal, welches signalisiert, dass von dem Verbrennungsmotor keine Antriebsleistung gefordert wird, kann insbesondere von einer Antriebs- und/oder Bremssteuerung des Schienenfahrzeugs erzeugt werden. Das Signal wird insbesondere dann erzeugt, wenn der Fahrer des Schienenfahrzeugs keine Traktion anfordert (z.B. befindet sich ein entsprechender Steuerhebel des Fahrers in neutraler Position) und/oder wenn eine Geschwindigkeitsregelung keinen Bedarf für eine Traktion ermittelt, z.B. weil die vom Fahrer gewählte Geschwindigkeit erreicht ist und ohne Traktion beibehalten werden kann (z.B. bei abschüssiger Fahrstrecke, so dass sich das Fahrzeug im so genannten Schubbetrieb befindet). Das Signal kann auch erzeugt werden, wenn eine zentrale Steuerung der Anordnung einen von mehreren Verbrennungsmotoren des Schienenfahrzeugs nicht für eine Traktion benötigt, z.B. im Teillastbetrieb.

Die Steuerung zum Steuern des motorischen Betriebs des Generators (im Folgenden: Generatorsteuerung) empfängt das genannte Signal. Die Generatorsteuerung steuert den Generator so an, dass er den Verbrennungsmotor bei Leerlaufdrehzahl des Verbrennungsmotors antreibt. Insbesondere kann die Steuerung die Frequenz des Wechselstroms vorgeben und/oder einstellen, mit dem der Generator in seinem motorischen Betrieb betrieben wird. Vorzugsweise wird der Generator zu Beginn des motorischen Betriebs so gesteuert, dass der motorische Betrieb ruckfrei beginnt. Insbesondere kann mit dem Generator, der mechanischen Kopplung und/oder mit dem Verbrennungsmotor ein Drehwinkelgeber kombiniert sein, der es erlaubt, die momentane Polradstellung des Generators, der mechanischen Kopplung und/oder des Verbrennungsmotors zu erfassen. In diesem Fall wird der Wechselstrom, mit dem der Generator zu Beginn des motorischen Betriebes versorgt wird, vorzugsweise so erzeugt, dass ein Ruck zu Beginn des motorischen Betriebes vermieden wird. Der Wechselstrom wird also in diesem Sinne phasenrichtig oder "phasen- und frequenzsynchron" erzeugt.

Die Anordnung weist eine Mehrzahl der Verbrennungsmotoren auf, wobei mit jedem der Verbrennungsmotoren ein zugeordneter Generator gekoppelt ist, der in einem generatorischen Betrieb von dem Verbrennungsmotor angetrieben wird, um elektrische Energie zu erzeugen, und der in einem motorischen Betrieb des Generators den zugeordneten Verbrennungsmotor antreibt, wobei die Anordnung ausgestaltet ist,
- einen Teil der Generatoren in dem motorischen Betrieb des Generators zu betreiben, wenn die Anordnung von mehreren Verbrennungsmotoren lediglich im Teillastbetrieb betrieben wird, so dass lediglich ein Teil der Verbrennungsmotoren mechanische Energie erzeugt und die anderen Verbrennungsmotoren bei Leerlaufdrehzahl von dem zugeordneten Generator angetrieben werden.

Optional ist die Anordnung ausgestaltet bei einem Bremsen des Schienenfahrzeugs die Generatoren in dem motorischen Betrieb des Generators zu betreiben, so dass die Verbrennungsmotoren bei Leerlaufdrehzahl von dem zugeordneten Generator angetrieben werden.

Dem entspricht bezüglich des Verfahrens, eine Mehrzahl der Verbrennungsmotoren zu betreiben, mit denen jeweils ein zugeordneter Generator gekoppelt ist, der in einem generatorischen Betrieb von dem Verbrennungsmotor angetrieben wird, um elektrische Energie zu erzeugen, und der in einem motorischen Betrieb des Generators den zugeordneten Verbrennungsmotor antreibt, wobei
- ein Teil der Generatoren in dem motorischen Betrieb des Generators betrieben wird, wenn die Anordnung von mehreren Verbrennungsmotoren lediglich im Teillastbetrieb betrieben wird, so dass lediglich ein Teil der Verbrennungsmotoren mechanische Energie erzeugt und die anderen Verbrennungsmotoren bei Leerlaufdrehzahl von dem zugeordneten Generator angetrieben werden.

Optional werden bei einem Bremsen des Schienenfahrzeugs die Generatoren in dem motorischen Betrieb des Generators betrieben, so dass die Verbrennungsmotoren bei Leerlaufdrehzahl von dem zugeordneten Generator angetrieben werden.

Unter einem Teillastbetrieb der Anordnung von mehreren Verbrennungsmotoren wird insbesondere ein Betrieb verstanden, in dem die mechanische Leistung lediglich eines Teils der Verbrennungsmotoren ausreicht, um die erforderliche elektrische Leistung, insbesondere die Traktionsleistung, optional zuzüglich sonstiger benötigter Leistung (z.B. für Hilfsbetriebe) in dem Schienenfahrzeug bereitzustellen. Vorteile des Betriebes lediglich eines Teils der Generatoren im generatorischen Betrieb und des anderen Teils im motorischen Betrieb sind eine geringere Geräuschbelastung und ein reduzierter Bedarf an Kraftstoff für die Verbrennungsmotoren. Insbesondere wird die Kraftstoffzufuhr für jeden der Verbrennungsmotoren, die im motorischen Betrieb des zugeordneten Generators von diesem bei Leerlaufdrehzahl angetrieben werden, gesperrt. Außer den genannten Hilfsbetrieben können auch andere Verbraucher elektrischer Energie von den Generatoren bzw. aus dem Gleichspannungszwischenkreis versorgt werden. Auch Verluste elektrischer Energie können bei der Frage, ob ein Teillastbetrieb stattfindet bzw. stattfinden soll, berücksichtigt werden. Insbesondere können im Teillastbetrieb mehrere verschiedene Leistungsstufen vorhanden sein. Jeder der Leistungsstufen ist eine Anzahl der Verbrennungsmotoren mit jeweils dem zugeordneten Generator zugeordnet. In der untersten Leistungsstufe des Teillastbetriebes wird lediglich ein Generator im generatorischen Betrieb betrieben, d.h. von dem zugeordneten Verbrennungsmotor angetrieben. In der nächst höheren Leistungsstufe werden zwei Generatoren im generatorischen Betrieb betrieben usw.. Demnach gibt es im Teillastbetrieb so viele verschiedene Leistungsstufen mit unterschiedlicher Anzahl der zu betreibenden Generatoren wie es Verbrennungsmotoren gibt, abzüglich 1. Bei Betrieb aller Generatoren im generatorischen Betrieb wird nicht mehr von Teillastbetrieb gesprochen, sondern von Volllastbetrieb, auch wenn nicht alle Verbrennungsmotoren ihre Höchstleistung erbringen.

Vorzugweise werden die Leistungsstufen für den Teillastbetrieb so vorgegeben, dass die unter Last betriebenen Verbrennungsmotoren (d.h. die zugeordneten Generatoren werden generatorisch betrieben) in einem vorgegebenen Drehzahlbereich mit bestmöglichem Wirkungsgrad betrieben werden. Insbesondere können daher bereits dann alle Verbrennungsmotoren unter Last betrieben werden, wenn dieselbe mechanische Leistung oder elektrische Leistung auch durch den Lastbetrieb von weniger als allen Verbrennungsmotoren erreicht werden kann, diese weniger als alle Verbrennungsmotoren aber in einem Bereich von Drehzahlen mit geringem Wirkungsgrad des jeweiligen Verbrennungsmotors stattfinden würde.

Wenn das Schienenfahrzeug gebremst wird, werden vorzugsweise alle Verbrennungsmotoren bei Leerlaufdrehzahl von dem zugeordneten Generator angetrieben, so dass insbesondere die Kraftstoffzufuhr zu allen Verbrennungsmotoren gesperrt werden kann bzw. sein kann.

Insbesondere kann eine Kennlinie für den Betrieb der mehreren Verbrennungsmotoren vorgegeben sein, wobei die Kennlinie die Abhängigkeit der von allen gleichzeitig unter Last betriebenen Verbrennungsmotoren von der mittleren Drehzahl der unter Last betriebenen Verbrennungsmotoren definiert. Unter der mittleren Drehzahl wird die Drehzahl der unter Last betriebenen Verbrennungsmotoren verstanden, die durch Bildung des arithmetischen Mittels der unter Last betriebenen Verbrennungsmotoren gebildet wird. Unter bestimmten Betriebsbedingungen (z.B. große Beschleunigung des Schienenfahrzeugs, Begrenzung des insgesamt von den Verbrennungsmaschinen und zugehörigen Generatoren sowie mechanischen Kopplungen erzeugten Schallpegels und/oder großer Leistungsbedarf für den Bezug von elektrischer Energie aus dem Gleichspannungszwischenkreis für andere Zwecke als für die Traktion) kann die Steuerung der Verbrennungsmotoren und Generatoren von der vorgegebenen Betriebskennlinie abweichen. Z.B. kann dann eine abweichende vorgegebene Betriebskennlinie von der Steuerung genutzt werden.

Insbesondere ist eine Betriebskennlinie vorgegeben, die den oben erwähnten Leistungsstufen für Teillastbetrieb und auch dem Volllastbetrieb entspricht. In der untersten Leistungsstufe, wenn lediglich einer der Verbrennungsmotoren unter Last betrieben wird, nimmt die gemäß der Betriebskennlinie von dem einen Verbrennungsmotor erzeugte Leistung stetig mit der Drehzahl des Verbrennungsmotors zu, bis ein gemäß der Betriebskennlinie vorgegebener erster Grenzwert der (z.B. von dem Fahrer oder einem Fahrerassistenzsystem) angeforderten Leistung erreicht ist. Bei Erreichen oder Überschreiten des Grenzwertes werden ein zweiter Verbrennungsmotor und der zugehörige Generator so angesteuert, dass auch der zweite Verbrennungsmotor unter Last betrieben wird, so dass auch der zweite zugeordnete Generator elektrische Energie erzeugt. Dabei wird vorzugsweise während einer Anfangsphase des gemeinsamen Betriebes der beiden Verbrennungsmotoren unter Last mit fortschreitender Zeit die Drehzahl beider Verbrennungsmotoren auf denselben Drehzahlwert angeglichen.

Mit weiter zunehmender angeforderter Leistung wird die mittlere Drehzahl der unter Last betriebenen Verbrennungsmotoren erhöht, bis (sofern noch zumindest ein weiterer nicht unter Last betriebener Verbrennungsmotor vorhanden ist) ein zweiter Grenzwert der angeforderten Drehzahl erreicht ist. Bei Erreichen oder Überschreiten dieses zweiten Grenzwertes wird der Betrieb des dritten Verbrennungsmotors gleichzeitig mit den beiden anderen Verbrennungsmotoren begonnen. Wiederum kann es eine mit Beginn des Betriebes gestartete Übergangsphase geben, in der die Drehzahlen der drei Verbrennungsmotoren auf den gleichen Wert, d.h. den mittleren Wert, angeglichen werden. Bei weiterer Zunahme der angeforderten Leistung wird entsprechend weiter verfahren und ein oder mehrere gegebenenfalls zusätzlich vorhandene Verbrennungsmotoren nacheinander in den Lastbetrieb gesteuert.

Allgemeiner formuliert werden die mehreren Verbrennungsmotoren mit den zugeordneten Generatoren daher so betrieben, dass bei Erreichen oder Überschreiten eines vorgegebenen Grenzwertes der angeforderten Leistung (oder einer äquivalenten Größe) der Betrieb eines weiteren Verbrennungsmotors, der sich bisher nicht im Lastbetrieb befunden hat und daher der zugeordnete Generator im motorischen Betrieb betrieben wurde, jm Leistungsbetrieb (d.h. der Verbrennungsmotor erzeugt mechanische Leistung) betrieben wird, d.h. der zugeordnete Generator wird bei Erreichen oder Überschreiten des Grenzwertes im generatorischen Betrieb betrieben.

Vorzugsweise wird bei Reduktion der angeforderten Leistung mit fortschreitender Zeit nicht bei demselben Grenzwert wie bei zunehmender angeforderter Leistung wieder ein Verbrennungsmotor von dem Lastbetrieb in den Leerlaufbetrieb überführt, d.h. der zugeordnete Generator wird in den motorischen Betrieb überführt, sondern ist/wird ein weiterer Grenzwert vorgegeben, der niedriger als der Grenzwert für zunehmende Leistungsanforderung ist. Bei Erreichen oder Unterschreiten des weiteren Grenzwertes wird einer der Verbrennungsmotoren in den Leerlaufbetrieb überführt, d.h. der Generator wird in den motorischen Betrieb überführt. Durch diese Hysterese der Betriebskennlinie wird vermieden, dass bei um den Grenzwert schwankenden Leistungsanforderungen häufig zwischen dem motorischen und dem generatorischen Betrieb eines Generators bzw. zwischen dem Leerlaufbetrieb und dem Leistungsbetrieb des zugeordneten Verbrennungsmotors gewechselt wird.

Die elektrische Energie zum Versorgen des Generators in dessen motorischem Betrieb wird aus dem Gleichspannungs-Zwischenkreis entnommen. Bevorzugtermaßen wird daher ein Wechselrichter, über den der Gleichspannungs-Zwischenkreis mit dem Generator verbunden ist, so betrieben, dass er den gewünschten Wechselstrom erzeugt. Geeignet sind z.B. für elektrische Systeme in Schienenfahrzeugen übliche Puls-Wechselrichter.

Insbesondere kann die Generatorsteuerung den Generator im motorischen Betrieb betreiben, wenn das Schienenfahrzeug ohne Traktionsanforderung des Fahrers und ohne Bremsanforderung des Fahrers rollt.

Insbesondere wenn die Anordnung zusätzlich zu zumindest einem Traktionsmotor Verbraucher aufweist, die mit elektrischer Energie aus dem Gleichspannungs-Zwischenkreis versorgt werden, ist die Steuerung vorzugsweise ausgestaltet, den Generator wie oben beschrieben im motorischen Betrieb zu betreiben, wobei die Steuerung ausgestaltet ist, dabei zumindest einen Traktionsmotor in einem generatorischen Betrieb zu betreiben, sodass die von den Verbrauchern aus dem Gleichspannungs-Zwischenkreis benötigte Energie zumindest teilweise von dem zumindest einen Traktionsmotor in den Gleichspannungs-Zwischenkreis eingespeist wird, wenn ein vorgegebenes Kriterium erfüllt ist, das einem nicht ausreichenden Ladezustand des Gleichspannungs-Zwischenkreis mit etwaig vorhandenem daran angeschlossenem Energiespeicher entspricht.

Bezüglich des Verfahrens wird daher bevorzugt, wenn elektrische Verbraucher, die zusätzlich zu dem zumindest einen Traktionsmotor vorhanden sind, über eine elektrische Verbraucherverbindung mit elektrischer Energie aus dem Gleichspannungs-Zwischenkreis versorgt werden, wenn der Generator im motorischen Betrieb betrieben wird und wenn ein vorgegebenes Kriterium erfüllt ist, das einem nicht ausreichenden Ladezustand des Gleichspannungs-Zwischenkreis mit etwaig vorhandenem daran angeschlossenem Energiespeicher entspricht, der zumindest eine Traktionsmotor in einem generatorischen Betrieb betrieben wird, sodass die von den Verbrauchern aus dem Gleichspannungs-Zwischenkreis benötigte Energie zumindest teilweise von dem zumindest einen Traktionsmotor in den Gleichspannungs-Zwischenkreis eingespeist wird.

Dies ermöglicht es, den motorischen Betrieb des Generators fortzusetzen und weiter Kraftstoff zu sparen, da die zusätzlichen elektrischen Verbraucher mit wiedergewonnener elektrischer Energie (Bremsenergie) betrieben werden. Selbstverständlich wird es bevorzugt, dass an dem Gleichspannungs-Zwischenkreis zumindest ein Speicher zur Speicherung elektrischer Energie angeschlossen ist, z.B. eine Batterie von Superkondensatoren. Aber auch konventionelle Glättungskondensatoren zur Glättung der Gleichspannung im Zwischenkreis nehmen elektrische Energie auf.

Das vorgegebene Kriterium, dessen Erfüllung zur Einspeisung von Bremsenergie führt, kann z.B. das Unterschreiten einer Gleichspannung des Gleichspannungs-Zwischenkreises sein. Dazu wird z.B. die Gleichspannung zwischen den beiden Potentialen des Gleichspannungs-Zwischenkreises gemessen und laufend daraufhin überwacht, ob eine vorgegebene Mindestspannung unterschritten wird. Eine solche Überwachung ist einfach zu realisieren und hat den Vorteil, dass die Spannung üblicherweise auch für den Betrieb von Wechselrichtern benötigt wird, welche an den Gleichspannungs-Zwischenkreis angeschlossen sind. Alternativ ist es aber beispielsweise möglich, den Ladezustand oder Endladezustand eines an den Zwischenkreis angeschlossenen Energiespeichers zu überwachen und beim Unterschreiten eines vorgegebenen Mindest-Ladezustandes mit der Einspeisung von Bremsenergie zu beginnen.

Die Einspeisung von Bremsenergie zur Deckung des Bedarfs von elektrischen Verbrauchern (mit Ausnahme der Traktionsmotoren) kann insbesondere beim Ausrollen des Fahrzeugs oder im Schubbetrieb (d.h. bei abschüssiger Fahrstrecke) erfolgen. Wenn eine Geschwindigkeitsregelung vorhanden ist, die versucht, die Fahrgeschwindigkeit des Fahrzeugs konstant zu halten, wenn der Fahrer oder ein Steuerungssystem des Fahrzeugs eine konstante Fahrgeschwindigkeit vorgibt, wenn jedoch die Strecke nicht abschüssig ist, wird das vorgegebene Kriterium nach kurzer Zeit erfüllt sein, da die im Zwischenkreis und den eventuell daran angeschlossenen Energiespeichern gespeicherte Energie in verhältnismäßig kurzer Zeit verbraucht ist. Dies führt aber dazu, dass der Verbrennungsmotor oder zumindest einer der Verbrennungsmotoren (wenn mehrere vorhanden sind) wieder im Lastbetrieb betrieben wird, um den zugeordneten Generator anzutreiben. Vorzugsweise wird die Geschwindigkeitsregelung daher so ausgeführt, dass trotz einer zeitlich konstanten Geschwindigkeitsvorgabe (d.h. einer konstanten SollGeschwindigkeit) eine Abnahme der Fahrgeschwindigkeit zugelassen wird. Hierzu wird eine Vorschrift vorgegeben, gemäß der die Abnahme der Fahrgeschwindigkeit stattfinden kann.

Es wird daher vorgeschlagen, wenn die Fahrgeschwindigkeit des Fahrzeugs von einer Geschwindigkeitsregelung eingestellt wird, die abhängig von einer Geschwindigkeitsvorgabe (z. B. des Fahrers) die der Vorgabe entsprechende Fahrgeschwindigkeit des Fahrzeugs regelt, indem der zumindest eine Traktionsmotor nach Bedarf im generatorischen oder motorischen Betrieb betrieben wird, die Geschwindigkeitsregelung so auszuführen, dass trotz einer zeitlich konstanten Geschwindigkeitsvorgabe gemäß einer vorgegebenen Vorschrift eine Abnahme der Fahrgeschwindigkeit zugelassen wird. Ferner wird eine Anordnung vorgeschlagen, bei der die Steuerung eine Geschwindigkeitsregelung aufweist oder mit dieser verbunden ist, wobei die Geschwindigkeitsregelung ausgestaltet ist, abhängig von einer Geschwindigkeitsvorgabe die der Vorgabe entsprechende Fahrgeschwindigkeit des Fahrzeugs zu regeln, indem der zumindest eine Traktionsmotor nach Bedarf im generatorischen oder motorischen Betrieb betrieben wird, und wobei die Geschwindigkeitsregelung ausgestaltet ist, trotz einer zeitlich konstanten Geschwindigkeitsvorgabe gemäß einer vorgegebenen Vorschrift eine Abnahme der Fahrgeschwindigkeit zuzulassen.

Als Vorschrift kann z.B. vorgeschrieben sein, dass die Fahrgeschwindigkeit pro Zeitintervall (z.B. 1 Minute) um einen vorgegebenen Maximalbetrag abnehmen kann und und/oder dass die Fahrgeschwindigkeit maximal um einen (zweiten) vorgegebenen Betrag unter der Soll-Fahrgeschwindigkeit liegen darf. Der zweite vorgegebene Betrag liegt z.B. bei 0,5 km/h. Da insbesondere bei einem Schienenfahrzeug-Zugverband die Masse des Zugverbandes sehr groß ist und daher die für den Betrieb der zusätzlichen Verbraucher benötigte Energie bei typischen Fahrgeschwindigkeiten von mindestens 30 oder 40 km/h sehr klein gegenüber der Bremsenergie ist, die z.B. über einen Zeitraum von wenigen Minuten entnommen werden muss, kann bereits bei einer sehr geringen Abnahme der Geschwindigkeit so viel Bremsenergie in den Zwischenkreis eingespeist werden, dass der Energiebedarf der sonstigen Verbraucher gedeckt werden kann.

Die Steuerung wurde oben auch als Generatorsteuerung bezeichnet. Die Steuerung wurde aber ebenfalls im Zusammenhang mit der Einspeisung von Bremsenergie durch den generatorischen Betrieb zumindest eines Traktionsmotors erwähnt. Bei diesen Steuerungen kann es sich um dieselbe Steuerung handeln oder es können jeweils Steuerungen für den Generator und die Einspeisung von Bremsenergie vorhanden sein. In dem zuletzt genannten Fall wird es bevorzugt, dass die Steuerungen signaltechnisch miteinander verbunden sind oder dass eine übergeordnete Steuerung vorhanden ist, die mit den beiden Steuerungen verbunden ist. Dadurch kann z.B. die Information ausgetauscht und/oder zumindest zu einer der Steuerungen übertragen werden, dass der motorische Betrieb des Generators begonnen hat, der motorische Betrieb des Generators beendet wurde, der motorische Betrieb des Generators zu beenden ist und/oder der generatorische Betrieb zumindest eines Traktionsmotors begonnen hat. Insbesondere eine einzige, gemeinsame Steuerung oder eine übergeordnete Steuerung kann aus den entsprechenden Informationen eine Betriebsweise der Anordnung ermitteln, die es erlaubt, die Kraftstoffeinsparung zu verbessern. Z.B. müsste bei Erfüllung des o.g. Kriteriums, wonach der Ladezustand des Gleichspannungs-Zwischenkreises nicht mehr ausreichend ist, der motorische Betrieb des Generators beendet werden. Wenn jedoch das Signal empfangen wird, dass der generatorische Betrieb des Traktionsmotors begonnen hat und daher Bremsenergie eingespeist wird, kann der motorische Betrieb des Generators fortgesetzt werden.

Wie erwähnt kann die Steuerung oder eine separate Motorsteuerung des Verbrennungsmotors ausgestaltet sein, eine Kraftstoffzufuhr in Kraftstoff-Verbrennungsräume des Verbrennungsmotors zu sperren, wenn der Verbrennungsmotor im motorischen Betrieb des Generators von dem Generator angetrieben wird. In diesem Fall kann die Steuerung oder die separate Motorsteuerung des Verbrennungsmotors ausgestaltet sein, die Kraftstoffzufuhr in die Kraftstoff-Verbrennungsräume wieder aufzunehmen, wenn eine über der vorgegebenen Leerlaufdrehzahl oder über dem Bereich der vorgegebenen Leerlaufdrehzahlen liegende zweite vorgegebene Drehzahl erreicht wird.

Insbesondere kann die Steuerung oder separate Motorsteuerung daher z.B. auf einen Messwert der Drehzahl reagieren und kann die Generatorsteuerung den Lastbetrieb des Verbrennungsmotors dadurch auslösen, dass sie die Drehgeschwindigkeit des Generators im motorischen Betrieb erhöht. Damit der Verbrennungsmotor nicht seine Bewegung stoppt und zeitaufwendig wieder gestartet werden muss, wird die Kraftstoffzufuhr wieder aufgenommen, so dass der Verbrennungsmotor aus eigener Kraft im Leerlauf betrieben werden kann.

Ausführungsbeispiele der Erfindung werden nun unter Bezugnahme auf die beigefügte Zeichnung beschrieben. Die einzelnen Figuren der Zeichnung zeigen schematisch:
- Fig. 1: eine Anordnung zum Versorgen von Traktionsmotoren und Verbrauchern in einem Schienenfahrzeug mit elektrischer Energie, wobei eine einzige Verbrennungsmotor-Generator-Kombination dargestellt ist,
- Fig. 2: eine Anordnung zum Versorgen von zumindest einem Traktionsmotor und zusätzlichen elektrischen Verbrauchern in einem Schienenfahrzeug mit elektrischer Energie, wobei eine Mehrzahl von Verbrennungsmotor-GeneratorKombinationen vorgesehen ist,
- Fig. 3: eine Steuerungs-und Regelungsstruktur zum Steuern des Betriebs eines Generators und eines Traktionsmotors und
- Fig. 4: eine Betriebskennlinie für eine Anordnung mit zumindest zwei Verbrennungsmotoren, denen jeweils ein Generator zugeordnet ist.

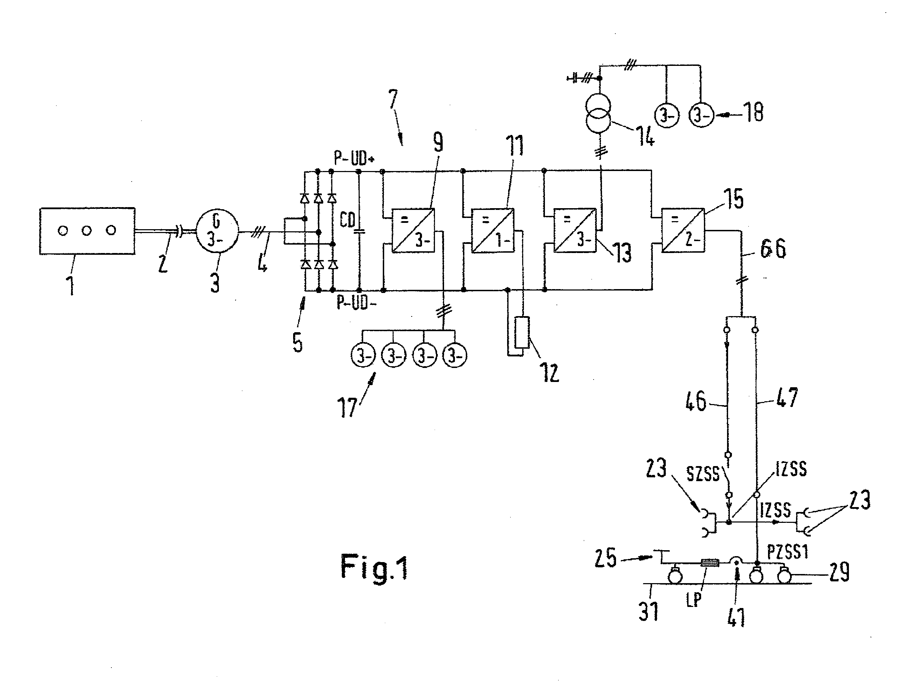

Gemäß Fig. 1 treibt ein Dieselmotor 1 über eine mechanische Kopplung 2 (z. B. Antriebswelle mit Trenn-Kupplung) einen Generator 3 an, der einen Dreiphasen-Wechselstrom erzeugt, welcher über einen Gleichrichter 5 gleichgerichtet wird. Der Gleichrichter 5 ist an einen Gleichspannungs-Zwischenkreis 7 angeschlossen. Die Potentiale des Gleichspannungs-Zwischenkreises 7 sind mit P-UD+ (obere in Fig. 1 dargestellte Seite des Zwischenkreises 7) und mit P-UD- (untere in Fig. 1 dargestellte Seite des Zwischenkreises 7) bezeichnet.

An den Zwischenkreis 7 sind ein Traktionswechselrichter 9, der vier Antriebsmotoren 17 des Schienenfahrzeugs über eine dreiphasige Verbindung versorgt, ein Brems-Chopper 11, an den zumindest ein Bremswiderstand 12 angeschlossen ist, ein Hilfsbetriebe-Wechselrichter 13, der Hilfsbetriebe 18 (d.h. zusätzliche elektrische Verbraucher) über eine Dreiphasen-Wechselstromleitung versorgt, und ein Verbraucher-Wechselrichter 15 angeschlossen, der andere zusätzliche elektrische Verbraucher über eine einphasige Verbraucherverbindung 66 (mit Leitungen 46, 47) mit elektrischer Energie versorgt.

Ferner sind wie üblich Kapazitäten CD zwischen die Potentiale P-UD+ und P-DU- des Zwischenkreises 7 geschaltet. Bei einer anderen Ausgestaltung kann der Verbraucher-Wechselrichter 15 die Verbraucher über eine dreiphasige Wechselspannungs-Verbraucherverbindung mit elektrischer Energie versorgen.

Der in Fig. 1 dargestellte Hilfsbetriebe-Wechselrichter 13 ist über einen Trenntransformator 14, der eine galvanische Trennung bewirkt, mit den Hilfsbetrieben 18 verbunden. Außerdem kann auch in der Verbraucherverbindung 66 ein Trenntransformator vorgesehen sein, so dass eine galvanische Trennung zwischen dem Verbraucher-Wechselrichter 15 und den Verbrauchern besteht. In dem dargestellten Fall ist der Verbraucher-Wechselrichter 15 aber ohne galvanische Trennung an die Zug-Sammelschiene IZSS angeschlossen, die wiederum Anschlüsse 23 zum Anschließen der zusätzlichen elektrischen Verbraucher aufweist.

Die Zugstrom-Sammelschiene IZSS weist lediglich eine Leitung auf. Das zweite elektrische Potential, das zur Übertragung der Energie von dem Verbraucher-Wechselrichter 15 zu den Verbrauchern benötigt wird, wird über Fahrzeugmasse/Fahrschiene 31 hergestellt. Die Wechselspannungs-Verbraucherverbindung 66 weist zwei Leitungen 46, 47 auf. Die Leitung 46 ist über den Schalter SZSS mit der Zugstrom-Sammelschiene IZSS verbunden. Die andere Leitung 47 ist über den Verbindungspunkt PZSS1, über Rad-Erdkontakte und Räder des Schienenfahrzeugs mit der Fahrschiene verbunden und über eine Drosselspule LP oder einen niederohmigen Widerstand an dem mit Bezugszeichen 25 gekennzeichneten Punkt mit Fahrzeugmasse verbunden. In Reihe zu der Drosselspule LP ist ein Stromsensor 41 geschaltet.

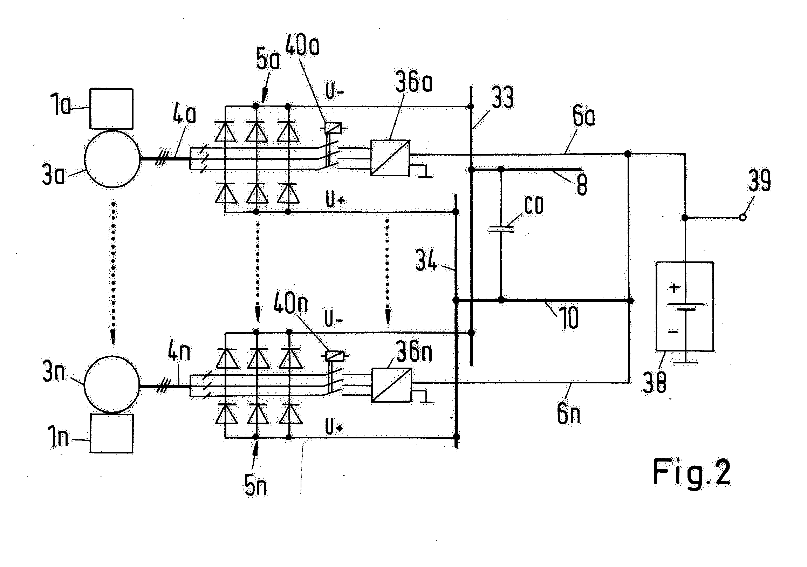

Fig. 2 zeigt eine Anordnung, die insbesondere wie in Fig. 1 ausgestaltet werden kann. Es ist jedoch lediglich ein Teil der Anordnung gezeichnet, wobei Details von einzelnen Komponenten der Anordnung dargestellt sind. Gleiche Bezugszeichen, insbesondere gleiche Zahlen, bezeichnen gleiche oder entsprechende Komponenten wie in Fig. 1.

Es sind in der Anordnung n Kombinationen mit jeweils einem Verbrennungsmotor 1 a...1 n und einem mechanisch damit gekoppelten Generator 3a...3n vorhanden, wobei n eine positive ganze Zahl ist. In der Praxis kommen z.B. vier solche Kombinationen in einer Lokomotive vor.

Jede der Kombinationen 1, 3 ist über eine dreiphasige Anschlussleitung 4a...4n mit einem Gleichrichter 5a...5n verbunden. In dem Ausführungsbeispiel sind die Gleichrichter 5 ungesteuerte dreiphasige Brückenschaltungen. Die unterschiedlichen Potentiale auf der Gleichspannungsseite der Gleichrichter 5 sind mit U+ bzw. U- bezeichnet. Die Gleichrichter 5 sind über Verbindungsleitungen 33, 34, die als Sammelleitungen für alle Gleichrichter 5 ausgestaltet sind, an den Gleichspannungs-Zwischenkreis mit den Leitungen 8, 10 verbunden.

Alternativ könnten mehrere Gleichspannungs-Zwischenkreise vorgesehen sein, aus denen jeweils zumindest ein Traktionsmotor mit elektrischer Energie versorgt wird.

In der Ausführungsform ist das eine Potential, nämlich das höhere Potential U+ des Zwischenkreises über jeweils eine weitere Verbindungsleitung 6a...6n mit einem Generator-Wechselrichter 36a...36n der jeweiligen Motor-Generatorkombination 1, 3 elektrisch verbunden. Das andere Potential des Zwischenkreises ist beispielsweise mit Fahrzeugmasse verbunden. Ferner ist in dem Ausführungsbeispiel ein Fahrzeug-Energiespeicher 38 zur Speicherung elektrischer Energie z. B. über einen DC/DC-Konverter (nicht gezeigt) mit der Leitung 10 des Zwischenkreises verbunden. Über einen Anschluss 39 kann der Energiespeicher und/oder der Zwischenkreis zusätzlich geladen werden, z.B. über ein so genanntes Batterie-Ladegerät, welches auch der DC/DC-Konverter sein kann.

Die Generator-Wechselrichter 36 sind über eine dreiphasige Leitung und ein Trenn-Schütz 40a...40n mit der dreiphasigen Leitung 4a...4n verbunden.

In einer alternativen Ausgestaltung kann statt der ungesteuerten Gleichrichterbrücke und dem Generator-Wechselrichter ein Konverter vorgesehen sein, der sowohl als Gleichrichter (bei generatorischem Betrieb des Generators) als auch als Wechselrichter (bei motorischem Betrieb des Generators) betreibbar ist. Die in Fig. 2 dargestellte Ausführungsform mit separater Gleichrichterbrücke und Generator-Wechselrichter hat den Vorteil, dass der Generator-Wechselrichter für die Übertragung kleinerer elektrischer Spannungen und Leistungen ausgelegt werden kann als die Gleichrichterbrücke, da im motorischen Betrieb des Generators nur geringe Leistungen erforderlich sind, um den Motor bei Lehrlaufdrehzahlen betreiben zu können. Ein gesteuerter oder geregelter integrierter Konverter für sowohl die Gleichrichtung als auch das Wechselrichten müsste aber für große Leistungen bei Traktionsbetrieb ausgelegt sein.

Die in Fig. 1 dargestellte Anordnung kann zusätzlich zu dem dargestellten Gleichrichter 5 auch einen Generator-Wechselrichter, wie in Fig. 2 dargestellt, aufweisen. Dieser Wechselrichter kann auf seiner Gleichspannungsseite mit den beiden Potentialen des Gleichspannungs-Zwischenkreises 7 verbunden sein. Statt dem Gleichrichter 5 und diesem Generator-Wechselrichter kann auch ein Konverter für sowohl das Gleichrichten als auch Wechselrichten vorgesehen sein.

Damit keine Traktionsenergie von dem Verbrennungsmotor 1 erzeugt werden muss, wird der Generator 3 im motorischen Betrieb betrieben und treibt den Verbrennungsmotor 1 bei Leerlaufdrehzahl an. Dabei wird vorzugsweise die Kraftstoffzufuhr zu dem Verbrennungsmotor 1 abgeschaltet. Sobald wieder Traktionsenergie von dem Verbrennungsmotor 1 benötigt wird, treibt der Verbrennungsmotor 1 über die mechanische Kopplung 2 wieder den Generator 3 an, der wiederum elektrische Energie erzeugt und über den Gleichrichter 5 oder einen Konverter in den Gleichspannungs-Zwischenkreis 7 einspeist.

Wenn die Verbraucher 18 und/oder die an die Anschlüsse 23 angeschlossenen Verbraucher während des motorischen Betriebs des Generators 3 elektrische Energie benötigen, kann diese zunächst aus dem Gleichspannungs-Zwischenkreis 7 und etwaigen daran angeschlossenen Energiespeichern (wie der Kapazität CD oder dem Fahrzeug-Energiespeicher 38) entnommen werden. Wenn aber die gespeicherte Energie nicht mehr ausreicht, wird vorzugsweise, wenn vom Fahrer oder Systemen des Fahrzeugs weder Traktion noch Bremsung angefordert wird, dennoch zumindest einer der Traktionsmotoren als Generator betrieben, so dass die von ihm erzeugte elektrische Energie in den Gleichspannungs-Zwischenkreis 7 eingespeist wird.

Auch bei einem Bremsvorgang des Schienenfahrzeugs wird der Generator 3 vorzugsweise im motorischen Betrieb betrieben und treibt den Verbrennungsmotor 1 bei Leerlaufdrehzahl an. Wiederum wird vorzugsweise die Kraftstoffzufuhr zu dem Motor 1 gesperrt. Insbesondere bei geringen Geschwindigkeiten nimmt mit weiter sinkender Fahrgeschwindigkeit die kinetische Energie und damit auch die von Traktionsmotoren erzeugte elektrische Energie ab. Abhängig von der Speicherkapazität der an den Zwischenkreis angeschlossenen Speicher kann es bereits bei langsamer Fahrt oder bereits kurz nach dem Stillstand des Fahrzeugs oder aber erst einige Zeit nach dem Stillstand erforderlich werden, für den weiter andauernden Betrieb der Verbraucher 18 und/oder der an die Anschlüsse 23 angeschlossenen Verbraucher im generatorischen Betrieb des Generators 3 (d.h. angetrieben durch den Verbrennungsmotor 1) elektrische Energie zu erzeugen und in den Zwischenkreis 7 einzuspeisen. Dazu wird die Kraftstoffzufuhr zu dem Motor 1 wieder aktiviert. Im Fall des Ausführungsbeispiels von Fig. 2 wird dabei das Trenn-Schütz 40a...40n geöffnet, so dass der Generator-Wechselrichter 36a...36n nicht mehr mit dem Generator 3a...3n verbunden ist, wie es während des motorischen Betriebes des Generators der Fall ist.

Stehen, wie im Ausführungsbeispiel von Fig. 2, mehrere Motor-Generatorkombinationen 1, 3 zur Verfügung, wird im Stillstand des Schienenfahrzeugs vorzugsweise lediglich eine der Kombinationen 1, 3 betrieben, um elektrische Energie in den Gleichspannungs-Zwischenkreis einzuspeisen.

Wird beim Bremsen des Schienenfahrzeugs von den Traktionsmotoren 17 mehr Energie in den Zwischenkreis 7 eingespeist, als daraus entnommen wird und gespeichert werden kann, wird über den Brems-Chopper 11 elektrische Energie den Bremswiderständen 12 zugeführt und in Wärme umgewandelt. Außerdem steht wie üblich auch eine mechanische Bremse zur Verfügung.

Zum Starten des Verbrennungsmotors 1 wird vorzugsweise das Trenn-Schütz 40 geschlossen und wird der Generator 3 über den Generator-Wechselrichter 36 (oder über einen anderen Konverter) mit elektrischer Energie aus dem Energiespeicher 38 versorgt, so dass der Generator im motorischen Betrieb den Verbrennungsmotor 1 startet. Im Fall eines Dieselmotors wird z.B. die Drehgeschwindigkeit des Generators 3 beim Startvorgang mit fortlaufender Zeit erhöht, bis der Motor z.B. eine Drehzahl von 400 U/min erreicht hat. Dann ist der Motor in der Lage, aus eigener Kraft die Leerlaufdrehzahl zu erreichen, die z.B. 600 U/min beträgt. Ähnlich wie bei der oben beschriebenen ruckfreien Betriebsweise zu Beginn des motorischen Betriebes des Generators, während der Verbrennungsmotor bereits läuft, kann auch beim Startvorgang die Drehwinkelstellung von Generator, mechanischer Kopplung und/oder Motor gemessen und berücksichtigt werden, so dass z.B. Frequenz- und Phasenlage des Stromes eingestellt werden können, der von dem Generator-Wechselrichter erzeugt wird.

Der Generator kann z.B. eine permanentmagneterregte Synchronmaschine sein. Es können jedoch auch Asynchronmaschinen verwendet werden.

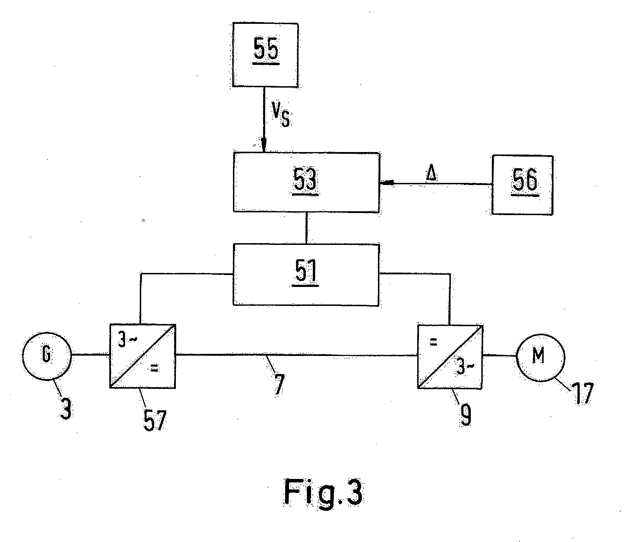

Fig. 3 zeigt schematisch eine Steuerungs-/Regelungsanordnung. Gleiche und funktionsgleiche Komponenten wie in den Fig. 1 und 2 sind mit denselben Bezugszahlen bezeichnet. Gegenüber den Anordnungen in Fig. 1 und Fig. 2 sind jedoch einige Komponenten der Anordnung weggelassen.

Im Gegensatz zu Fig. 1 und Fig. 2 ist der Generator 3 in dem Ausführungsbeispiel der Fig. 3 über einen Konverter 57 mit dem Gleichspannungs-Zwischenkreis 7 verbunden, wobei der Konverter sowohl im generatorischen Betrieb des Generators 3 als Gleichrichter arbeitet als auch im motorischen Betrieb des Generators 3 als Wechselrichter. Dieser Konverter 57 und der Traktionswechselrichter 9 werden von einer Steuerung 51 gesteuert, die z.B. die Schaltzeitpunkte für das Ein- und Ausschalten der Halbleiterschalter der Konverter 9, 57 festlegt und entsprechende Signale ausgibt. Es kann sich bei der Steuerung 51 jedoch auch um eine übergeordnete Steuerung handeln, so dass auch in Fig. 3 nicht dargestellte Steuerungen vorhanden sind, die den Konvertern 9, 57 einzeln zugeordnet sind.

Die Steuerung 51 ist mit einer Regelung 53 verbunden, die wiederum von einer Einrichtung 55 den Sollwert v_{S} der Fahrgeschwindigkeit des Fahrzeugs erhält. Ferner erhält die Regelung 53 von einer Einheit 56 Informationen darüber, auf welche Weise die Fahrgeschwindigkeit abnehmen kann, obwohl die Sollgeschwindigkeit v_{S} konstant geblieben ist. Diese Informationen sind mit Δ bezeichnet. Z.B. sagen die Informationen aus, dass die Fahrgeschwindigkeit bis auf einen vorgegebenen Wert unterhalb der aktuell gültigen Sollgeschwindigkeit v_{S} abnehmen kann, wobei der Differenzwert z.B. im Bereich von 0,3 bis 1 km/h liegt. Diese Informationen Δ gelten für die Betriebsphase, in der von den Fahrmotoren 17 weder eine Traktion noch eine Bremsung gefordert ist. Wie oben beschrieben kann aber in einer solchen Betriebsphase dennoch eine Bremsung mit sehr geringer Bremskraft stattfinden, weil zumindest einer der Traktionsmotoren 17 als Generator betrieben wird und somit elektrische Energie in den Gleichspannungs-Zwischenkreis 7 einspeist.

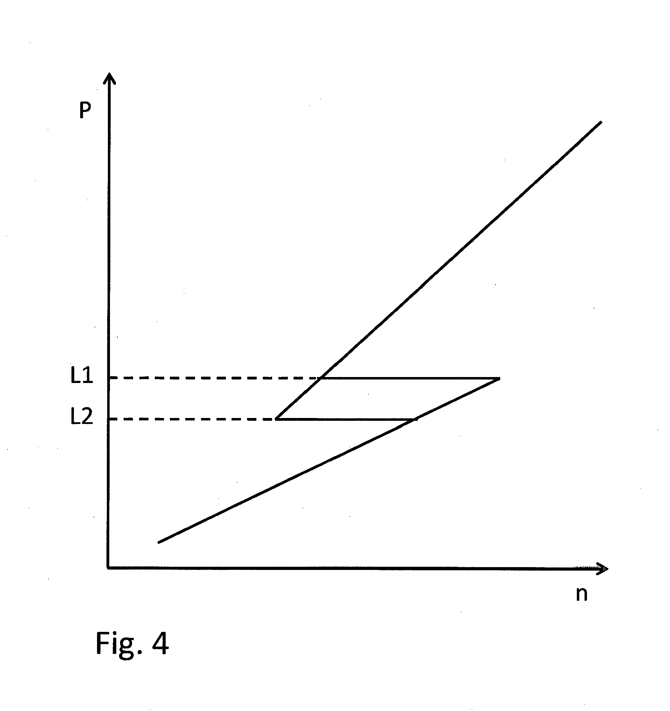

Fig. 4 zeigt ein Diagramm mit einer Betriebskennlinie, wobei auf der horizontalen Achse (x-Achse) des Koordinatensystems die mittlere Drehzahl n der unter Last betriebenen Verbrennungsmotoren aufgetragen ist und entlang der vertikalen Achse (y-Achse) des Koordinatensystems die angeforderte Leistung P aufgetragen ist. Ausgehend von kleinen Werten für die Drehzahl und angeforderte Leistung nimmt die Leistung zunächst linear mit der Drehzahl zu, bis auf einem Niveau L1 der Leistung ein Grenzwert erreicht ist. Bei Erreichen oder Überschreiten des Grenzwertes wird ein weiterer Verbrennungsmotor in den Leistungsbetrieb bzw. Lastbetrieb und somit der zugeordnete Generator in den generatorischen Betrieb gestartet. Vorher befand sich dieser Generator im motorischen Betrieb und hat den zugeordneten Verbrennungsmotor bei Leerlaufdrehzahl angetrieben. Mit weiter zunehmender Leistungsanforderung erhöht sich die Leistung beider Verbrennungsmotoren oder aller Verbrennungsmotoren, die sich im Lastbetrieb befinden, weiter. Nimmt die angeforderte Leistung wieder unter das Niveau L1 der angeforderten Leistung ab, wird zunächst noch kein unter Last betriebener Verbrennungsmotor in den Leerlaufbetrieb überführt, d.h. der zugeordnete Generator wird noch weiter im generatorischen Betrieb betrieben und von dem Verbrennungsmotor angetrieben. Erst bei Erreichen oder Unterschreiten des Leistungsniveaus L2, das kleiner ist als das Leistungsniveau L1, wird einer der unter Last betriebenen Verbrennungsmotoren in den Leerlaufbetrieb überführt, d.h. der zugeordnete Generator wird in den motorischen Betrieb überführt, in dem er den zugeordneten Verbrennungsmotor bei Leerlaufdrehzahl antreibt.

Insbesondere verlaufen die beiden ansteigenden Geraden in Fig. 4 nicht parallel zueinander, sondern unter einem spitzen Winkel, wobei ihre geraden Verlängerungen sich in einem nicht näher bezeichneten Punkt des Diagramms schneiden würden (z. B. im Schnittpunkt oder nahe dem Schnittpunkt der beiden Koordinatenachsen), in dem die mittlere Drehzahl n die angeforderte Leistung P = 0 liefern würde. Entsprechendes gilt für Fälle, in denen mehr als zwei ansteigenden Geraden vorkommen, das heißt zwei oder mehr Verbrennungsmotoren zwischen dem motorischen Betrieb und dem generatorischen Betrieb umgeschaltet werden können.

## Patentansprüche

1. Anordnung zum Versorgen von elektrischen Traktionsmotoren (17) in einem Schienenfahrzeug mit elektrischer Energie, wobei die Anordnung aufweist:
- zumindest einen Verbrennungsmotor (1),
- für den zumindest einen Verbrennungsmotor (1) jeweils einen zugeordneten Generator (3) zum Erzeugen der elektrischen Energie, wobei der Generator (3) mechanisch mit dem Verbrennungsmotor (1) gekoppelt ist, sodass er bei einem generatorischen Betrieb des Generators (3) von dem Verbrennungsmotor (1) angetrieben wird,
- einen Gleichrichter (5) zum Gleichrichten eines von dem Generator (3) erzeugten elektrischen Wechselstroms,
- einen Gleichspannungs-Zwischenkreis (7), der über den Gleichrichter (5) elektrisch mit dem Generator (3) verbunden ist,
**dadurch gekennzeichnet, dass**
- die Anordnung einen Generator-Wechselrichter (36) aufweist, der zusätzlich zu dem Gleichrichter (5) vorhanden ist oder der der im Wechselrichter-Betrieb betriebene Gleichrichter (57) ist, wobei der Generator-Wechselrichter (36; 57) den Gleichspannungs-Zwischenkreis (7) mit dem Generator (3) verbindet, um den Generator (3) in einem motorischen Betrieb als Motor zu betreiben,
- die Anordnung eine Steuerung (51) zum Steuern des motorischen Betriebs des Generators (3) aufweist,
wobei die Steuerung (51) einen Signaleingang aufweist, um ein Signal zu empfangen, das signalisiert, dass von dem Verbrennungsmotor (1) keine Antriebsleistung gefordert wird,
wobei eine Leerlaufdrehzahl oder ein Bereich von Leerlaufdrehzahlen des Verbrennungsmotors (1) vorgegeben ist und die Steuerung (51) ausgestaltet ist, bei Empfang des Signals den motorischen Betrieb des Generators (3) so zu steuern, dass der Verbrennungsmotor (1) bei der vorgegebenen Leerlaufdrehzahl oder bei einer Leerlaufdrehzahl im Bereich der vorgegebenen Leerlaufdrehzahlen von dem Generator (3) angetrieben wird, wobei der Generator (3) über den Wechselrichter mit elektrischer Energie aus dem Gleichspannungs-Zwischenkreis (7) versorgt wird, wobei die Anordnung eine Mehrzahl der Verbrennungsmotoren (1 a ... 1 n) aufweist, wobei mit jedem der Verbrennungsmotoren (1 a ... 1 n) ein zugeordneter Generator (3a ... 3n) gekoppelt ist, der in einem generatorischen Betrieb von dem Verbrennungsmotor (1 a ... 1 n) angetrieben wird, um elektrische Energie zu erzeugen, und der in einem motorischen Betrieb des Generators (3a ... 3n) den zugeordneten Verbrennungsmotor (1 a ... 1 n) antreibt, wobei die Anordnung ausgestaltet ist, einen Teil der Generatoren (3a ... 3n) in dem motorischen Betrieb des Generators (3a ... 3n) zu betreiben, wenn die Anordnung von mehreren Verbrennungsmotoren (1a ... 1 n) lediglich im Teillastbetrieb betrieben wird, so dass lediglich ein Teil der Verbrennungsmotoren (1a ... 1 n) mechanische Energie erzeugt und die anderen Verbrennungsmotoren bei Leerlaufdrehzahl von dem zugeordneten Generator (3a ... 3n) angetrieben werden.

2. Anordnung nach Anspruch 1, wobei die Anordnung ausgestaltet ist, bei einem Bremsen des Schienenfahrzeugs die Generatoren (3a ... 3n) in dem motorischen Betrieb des Generators (3a ... 3n) zu betreiben, so dass die Verbrennungsmotoren bei Leerlaufdrehzahl von dem zugeordneten Generator (3a ... 3n) angetrieben werden.

3. Anordnung nach Anspruch 1 oder 2, wobei die Anordnung ferner eine elektrische Verbraucherverbindung (66) zur Versorgung von elektrischen Verbrauchern, die zusätzlich zu dem zumindest einen Traktionsmotor (17) zu versorgen sind, aufweist, wobei die elektrische Verbraucherverbindung (66) an den Gleichspannungs-Zwischenkreis (7) angeschlossen ist, sodass die Verbraucher mit elektrischer Energie aus dem Gleichspannungs-Zwischenkreis (7) versorgbar sind.

4. Anordnung nach einem der Ansprüche 1 bis 3, wobei die Steuerung ausgestaltet ist, den Generator (3) oder einen der Generatoren (3a ... 3n) nach Anspruch 1 im motorischen Betrieb zu betreiben, wenn Verbraucher (18) mit elektrischer Energie aus dem Gleichspannungs-Zwischenkreis (7) versorgt werden und wobei die Steuerung (51) ausgestaltet ist, dabei zumindest einen Traktionsmotor (17) in einem generatorischen Betrieb zu betreiben, sodass die von den Verbrauchern aus dem Gleichspannungs-Zwischenkreis (7) benötigte Energie zumindest teilweise von dem zumindest einen Traktionsmotor (17) in den Gleichspannungs-Zwischenkreis (7) eingespeist wird, wenn ein vorgegebenes Kriterium erfüllt ist, das einem nicht ausreichenden Ladezustand des Gleichspannungs-Zwischenkreis (7) mit etwaig vorhandenem daran angeschlossenem Energiespeicher (CD, 38) entspricht.

5. Anordnung nach dem vorhergehenden Anspruch, wobei die Steuerung (51) eine Geschwindigkeitsregelung aufweist oder mit dieser (53) verbunden ist, wobei die Geschwindigkeitsregelung (53) ausgestaltet ist, abhängig von einer Geschwindigkeitsvorgabe (v_{S}) die der Vorgabe entsprechende Fahrgeschwindigkeit des Fahrzeugs zu regeln, indem der zumindest eine Traktionsmotor (17) nach Bedarf im generatorischen oder motorischen Betrieb betrieben wird, und wobei die Geschwindigkeitsregelung (53) ausgestaltet ist, trotz einer zeitlich konstanten Geschwindigkeitsvorgabe gemäß einer vorgegebenen Vorschrift eine Abnahme der Fahrgeschwindigkeit zuzulassen.

6. Anordnung nach einem der Ansprüche 1 bis 5, wobei die Steuerung (51) oder eine separate Motorsteuerung des Verbrennungsmotors (1) ausgestaltet ist, eine Kraftstoffzufuhr in Kraftstoff-Verbrennungsräume des Verbrennungsmotors (1) zu sperren, wenn der Verbrennungsmotor (1) im motorischen Betrieb des Generators (3) von dem Generator (3) angetrieben wird.

7. Anordnung nach dem vorhergehenden Anspruch, wobei die Steuerung (51) oder die separate Motorsteuerung des Verbrennungsmotors (1) ausgestaltet ist, die Kraftstoffzufuhr in die Kraftstoff-Verbrennungsräume wieder aufzunehmen, wenn eine über der vorgegebenen Leerlaufdrehzahl oder über dem Bereich der vorgegebenen Leerlaufdrehzahlen liegende zweite vorgegebene Drehzahl erreicht wird.

8. Verfahren zum Versorgen von elektrischen Traktionsmotoren (17) in einem Schienenfahrzeug mit elektrischer Energie, wobei:
- zumindest ein Verbrennungsmotor (1) in einem generatorischen Betrieb einen dem Verbrennungsmotor (1) zugeordneten Generator (3) antreibt, der Generator (3) elektrische Energie erzeugt, die erzeugte elektrische Energie gleichgerichtet und in einen Gleichspannungs-Zwischenkreis (7) eingespeist wird, aus dem der zumindest eine Traktionsmotor (17) mit Traktionsenergie versorgt wird,
**dadurch gekennzeichnet, dass**
- in einem motorischen Betrieb des Generators (3) der Generator (3) elektrische Energie aus dem Gleichspannungs-Zwischenkreis (7) bezieht und den Verbrennungsmotor (1) antreibt,
- in dem motorischen Betrieb des Generators (3) bei Empfang eines Signals, das signalisiert, dass von dem Verbrennungsmotor (1) keine Antriebsleistung gefordert wird, der Generator (3) so gesteuert wird, dass der Verbrennungsmotor (1) bei einer vorgegebenen Leerlaufdrehzahl oder bei einer Leerlaufdrehzahl in einem vorgegebenen Bereich von Leerlaufdrehzahlen von dem Generator (3) angetrieben wird,
wobei eine Mehrzahl der Verbrennungsmotoren (1a ... 1n) betrieben wird, mit denen jeweils ein zugeordneter Generator (3a ... 3n) gekoppelt ist, der in einem generatorischen Betrieb von dem Verbrennungsmotor (1a ... 1 n) angetrieben wird, um elektrische Energie zu erzeugen, und der in einem motorischen Betrieb des Generators (3a ... 3n) den zugeordneten Verbrennungsmotor (1a ... 1 n) antreibt, wobei ein Teil der Generatoren (3a ... 3n) in dem motorischen Betrieb des Generators (3a ... 3n) betrieben wird, wenn die Anordnung von mehreren Verbrennungsmotoren (1a ... 1n) lediglich im Teillastbetrieb betrieben wird, so dass lediglich ein Teil der Verbrennungsmotoren (1a ... 1 n) mechanische Energie erzeugt und die anderen Verbrennungsmotoren bei Leerlaufdrehzahl von dem zugeordneten Generator (3a ... 3n) angetrieben werden.

9. Verfahren nach Anspruch 8, wobei bei einem Bremsen des Schienenfahrzeugs die Generatoren (3a ... 3n) in dem motorischen Betrieb des Generators (3a ... 3n) betrieben werden, so dass die Verbrennungsmotoren bei Leerlaufdrehzahl von dem zugeordneten Generator (3a ... 3n) angetrieben werden.

10. Verfahren nach Anspruch 8 oder 9, wobei, wenn elektrische Verbraucher, die zusätzlich zu dem zumindest einen Traktionsmotor (17) vorhanden sind, über eine elektrische Verbraucherverbindung (66) mit elektrischer Energie aus dem Gleichspannungs-Zwischenkreis (7) versorgt werden, wenn der Generator (3) oder die Generatoren (3a ... 3n) nach Anspruch 9 im motorischen Betrieb betrieben wird/werden und wenn ein vorgegebenes Kriterium erfüllt ist, das einem nicht ausreichenden Ladezustand des Gleichspannungs-Zwischenkreis (7) mit etwaig vorhandenem daran angeschlossenem Energiespeicher entspricht, der zumindest eine Traktionsmotor (17) in einem generatorischen Betrieb betrieben wird, sodass die von den Verbrauchern aus dem Gleichspannungs-Zwischenkreis (7) benötigte Energie zumindest teilweise von dem zumindest einen Traktionsmotor (17) in den Gleichspannungs-Zwischenkreis (7) eingespeist wird.

11. Verfahren nach dem vorhergehenden Anspruch, wobei die Fahrgeschwindigkeit des Fahrzeugs von einer Geschwindigkeitsregelung (53) eingestellt wird, die abhängig von einer Geschwindigkeitsvorgabe die der Vorgabe entsprechende Fahrgeschwindigkeit des Fahrzeugs regelt, indem der zumindest eine Traktionsmotor (17) nach Bedarf im generatorischen oder motorischen Betrieb betrieben wird, und wobei die Geschwindigkeitsregelung (53) so ausgeführt wird, dass trotz einer zeitlich konstanten Geschwindigkeitsvorgabe gemäß einer vorgegebenen Vorschrift eine Abnahme der Fahrgeschwindigkeit zugelassen wird.

12. Verfahren nach einem der Ansprüche 8 bis 11, wobei eine Kraftstoffzufuhr in Kraftstoff-Verbrennungsräume des Verbrennungsmotors (1) gesperrt wird, wenn der Verbrennungsmotor (1) im motorischen Betrieb des Generators (3) von dem Generator (3) angetrieben wird.

13. Verfahren nach dem vorhergehenden Anspruch, wobei die Kraftstoffzufuhr in die Kraftstoff-Verbrennungsräume wieder aufgenommen wird, wenn eine über der vorgegebenen Leerlaufdrehzahl oder über dem Bereich der vorgegebenen Leerlaufdrehzahlen liegende zweite vorgegebene Drehzahl erreicht wird.

## Claims

1. An assembly for supplying electrical energy to electrical traction motors (17) in a rail vehicle, in particular in a train set, wherein the assembly comprises:
- at least one internal combustion engine (1),
- a generator (3) allocated to the at least one internal combustion engine (1) in order to generate electrical energy, wherein the generator (3) is mechanically coupled to the internal combustion engine (1) such that it is driven by the internal combustion engine (1) upon generator operation of the generator (3),
- a rectifier (5) for rectifying an electrical alternating current generated by the generator (3),
- a direct voltage intermediate circuit (7), which is electrically connected to the generator (3) via the rectifier (5),
**characterized in that**
- the assembly comprises a generator inverter (36), which is present in addition to the rectifier (5) or which is the rectifier (57) operated in the inverter mode, wherein the generator inverter (36, 57) connects the direct voltage intermediate circuit (7) to the generator (3) in order to operate the generator (3) in a motorized mode as a motor,
- the assembly comprises a control (51) for controlling the motorized mode of the generator (3),
wherein the control (51) has a signal input for receiving a signal which signals that no drive power is demanded from the internal combustion engine (1),
wherein an idle speed or a range of idle speeds of the internal combustion engine (1) is specified and the control (51) is configured, upon reception of the signal, to control the motorized operation of the generator (3) such that the internal combustion engine (1) is driven by the generator (3) at the specified idle speed or at an idle speed in the range of specified idle speeds, wherein electrical energy from the direct voltage intermediate circuit (7) is supplied to the generator (3) via the inverter,
wherein the assembly comprises a plurality of internal combustion engines (1a ... 1n), wherein an allocated generator (3a ... 3n) is coupled to each of the internal combustion engines (1a ... 1n), which generator is driven in generator operation by the internal combustion engine (1a ... 1 n) in order to generate electrical energy, and which in motorized operation of the generator (3a ... 3n) drives the allocated internal combustion engine (1a ... 1 n), wherein the assembly is configured to operate a portion of the generators (3a ... 3n) in the motorized mode of the generator (3a ... 3n) if the assembly of several internal combustion engines (1a ... 1 n) is operated only in the partial load mode such that only a portion of the internal combustion engines (1a ... 1 n) generates mechanical energy and the other internal combustion engines are driven at idle speed by the allocated generator (3a ... 3n).

2. The assembly as in claim 1, wherein the assembly is configured upon braking the rail vehicle to operate the generators (3a ... 3n) in the motorized mode of the generator (3a ... 3n) such that the internal combustion engines are driven at idle speed by the allocated generator (3a ... 3n).

3. The assembly as in claim 1 or 2, wherein the assembly further comprises an electrical consumer connection (66) for supplying electrical consumers that require supplying in addition to the at least one traction motor (17), wherein the electrical consumer connection (66) is connected to the direct voltage intermediate circuit (7) such that the consumers can be supplied with electrical energy from the direct voltage intermediate circuit (7).

4. The assembly as in one of the claims 1 to 3, wherein the control is configured to operate the generator (3) or one of the generators (3a ... 3n) as in claim 1 in the motorized mode when electrical energy is supplied to consumers (18) from the direct voltage intermediate circuit (7) and wherein the control (51) is configured to operate at least one traction motor (17) in a generator mode such that the energy needed from the direct voltage intermediate circuit (7) by the consumers is at least partially fed into the direct voltage intermediate circuit (7) by the at least one traction motor (17) if a specified criterion is fulfilled that corresponds to an insufficient state of charge of the direct voltage intermediate circuit (7) with any existing energy storage units (CD, 38) connected thereto.

5. The assembly as in the previous claim, wherein the control (51) comprises or is connected to a speed regulator (53), wherein the speed regulator (53) is configured to regulate the vehicle speed corresponding to a speed specification (v_{S}) as a function of said speed specification by operating the at least one traction motor (17) as needed in the generator or motorized mode, and wherein the speed regulator (53) is configured to permit a decrease of the travel speed according to a specified instruction in spite of a temporally constant speed specification.

6. The assembly as in one of claims 1 to 5, wherein the control (51) or a separate engine control of the internal combustion engine (1) is configured to cut off a fuel supply to fuel combustion chambers of the internal combustion engine (1) when the internal combustion engine (1) is driven by the generator (3) in the motorized mode of the generator (3).

7. The assembly as in the previous claim, wherein the control (51) or the separate engine control of the internal combustion engine (1) is configured to resume the fuel supply to the fuel combustion chambers of the internal combustion engine (1) if a second specified speed above the specified idle speed or above the range of specified idle speeds is reached.

8. A method for supplying electrical energy to traction motors (17) in a rail vehicle with electrical energy, wherein:
- at least one internal combustion engine (1) in generator operation drives a generator (3) allocated to the internal combustion engine (1), the generator (3) generates electrical energy, the generated electrical energy is rectified and fed into a direct voltage intermediate circuit (7) from which the at least one traction motor (17) is supplied with traction energy,
**characterized in that**
- the generator (3) in motorized operation of the generator (3) acquires electrical energy from the direct voltage intermediate circuit (7) and drives the internal combustion engine (1),
- in the motorized mode of the generator (3) upon reception of a signal which signals that no drive power is demanded from the internal combustion engine (1), the generator (3) is controlled such that the internal combustion engine (1) is driven by the generator (3) at a specified idle speed or at an idle speed in a specified range of idle speeds
wherein a plurality of the internal combustion engines (1a ... 1 n) is operated, wherein to each of the internal combustion engines is coupled an allocated generator (3a ... 3n), which is driven in generator operation by the internal combustion engine (1a ... 1 n) in order to generate electrical energy and which in motorized operation of the generator (3a ... 3n) drives the allocated internal combustion engine (1a ... 1n), wherein a portion of the generators (3a ... 3n) is operated in the motorized mode of the generator (3a ... 3n) when the assembly of several internal combustion engines (1 a ... 1 n) is operated only in the partial load mode such that only a portion of the internal combustion engines (1 a ... 1 n) generates mechanical energy and the other internal combustion engines are driven at idle speed by the allocated generator (3a ... 3n).

9. The method as in claim 8, wherein, upon braking the rail vehicle, the generators (3a ... 3n) are operated in the motorized mode of the generator (3a ... 3n) such that the internal combustion engines are driven at idle speed by the allocated generator (3a ... 3n).

10. The method as in claim 8 or 9, wherein, when electrical consumers that are present in addition to the at least one traction motor (17) are supplied with electrical energy from the direct voltage intermediate circuit (7) via an electrical consumer connection (66), when the generator (3) or generators (3a ... 3n) as in claim 9 is/are operated in the motorized mode, and when a specified criterion is fulfilled that corresponds to an insufficient state of charge of the direct voltage intermediate circuit (7) with any existing storage units connected thereto, the at least one traction motor (17) is operated in a generator mode such that the energy from the direct voltage intermediate circuit (7) needed by the consumers is at least partially fed into the direct voltage intermediate circuit (7) by the at least one traction motor (17).

11. The method as in the previous claim, wherein the vehicle travel speed is set by a speed regulator (53), which regulates the vehicle travel speed corresponding to a speed specification as a function of said speed specification by operating the at least one traction motor (17) as needed in the generator or motorized mode, and wherein the speed regulator (53) is configured such that a decrease of the travel speed according to a specified instruction is permitted in spite of a temporally constant speed specification.

12. The method as in one of claims 8 - 11, wherein a fuel supply to fuel combustion chambers of the internal combustion engine (1) is cut off when the internal combustion engine (1) is driven by the generator (3) in the motorized mode of the generator (3).

13. The method as in the previous claim, wherein the fuel supply to the fuel combustion chambers is resumed when a second specified speed above the specified idle speed or above the range of specified idle speeds is reached.

## Revendications

1. Ensemble servant à alimenter en énergie électrique des moteurs de traction électriques (17) dans un véhicule ferroviaire, sachant que l'ensemble présente :
- au moins un moteur à combustion interne (1) ;
- pour le moteur à combustion interne (1) au moins au nombre de un, respectivement un générateur (3) associé servant à produire l'énergie électrique, sachant que le générateur (3) est couplé mécaniquement au moteur à combustion interne (1) de sorte qu'il est entraîné par le moteur à combustion interne (1) lorsque le générateur (3) se trouve en mode générateur,
- un redresseur (5) servant à redresser un courant alternatif électrique produit par le générateur (3),
- un circuit intermédiaire de tension continue (7), qui est relié de manière électrique au générateur (3) par l'intermédiaire du redresseur (5),
**caractérisé en ce**
- **que** l'ensemble présente un onduleur de générateur (36), qui est présent en plus du redresseur (5) ou qui est le redresseur (57) fonctionnant en mode d'onduleur, sachant que l'onduleur de générateur (36 ; 57) relie le circuit intermédiaire de tension continue (7) au générateur (3) afin de faire fonctionner le générateur (3) dans un mode motorisé comme moteur,
- **que** l'ensemble présente une commande (51) servant à commander le mode motorisé du générateur (3),
sachant que la commande (51) présente une entrée de signal afin de recevoir un signal signalant qu'aucune puissance d'entraînement n'est exigée du moteur à combustion interne (1),
sachant que le nombre de tours à marche à vide ou une plage de nombres de tours à marche à vide du moteur à combustion interne (1) est prédéfini et que la commande (51) est configurée pour commander, à réception du signal, le mode motorisé du générateur (3) de sorte que le moteur à combustion interne (1) est entraîné par le générateur (3) dans la plage des nombres de tours de marche à vide prédéfinis, sachant que le générateur (3) est alimenté par l'intermédiaire de l'onduleur en énergie électrique en provenance du circuit intermédiaire de tension continue (7),
sachant que l'ensemble présente une pluralité de moteurs à combustion interne (1a ... 1n) ,
sachant qu'un générateur (3a ... 3n) associé est couplé à chacun des moteurs à combustion interne (la... 1n), lequel est entraîné par le moteur à combustion interne (1a ... 1n) dans un mode générateur afin de produire de l'énergie électrique et qui, lorsque le générateur (3a ... 3n) se trouve dans un mode motorisé, entraîne le moteur à combustion interne (1a ... 1n) associé, sachant que l'ensemble est configuré pour faire fonctionner une partie des générateurs (3a ... 3n) dans un mode motorisé du générateur (3a ... 3n), lorsque l'ensemble comprenant plusieurs moteurs à combustion interne (1a ... 1n) est amené à fonctionner uniquement en mode de charge partielle de sorte qu'uniquement une partie des moteurs à combustion interne (1a ... 1n) produit de l'énergie mécanique et que les autres moteurs à combustion interne sont entraînés par le générateur (3a ... 3n) associé dans le cas d'un nombre de tours de marche à vide.

2. Ensemble selon la revendication 1, sachant que l'ensemble est configuré pour faire fonctionner les générateurs (3a ... 3n) dans le mode motorisé du générateur (3a ... 3n) en cas de freinage du véhicule ferroviaire de sorte que les moteurs à combustion interne sont entraînés par le générateur (3a .... 3n) associé dans le cas d'un nombre tours de marche à vide.

3. Ensemble selon la revendication 1 ou 2, sachant que l'ensemble présente en outre un raccordement de consommateur électrique (66) servant à alimenter des consommateurs électriques, qui sont à alimenter en complément du moteur de traction (17) au moins au nombre de un, sachant que le raccordement de consommateur électrique (66) est connecté au circuit intermédiaire de tension continue (7) de sorte que les consommateurs peuvent être alimentés en énergie électrique en provenance du circuit intermédiaire de tension continue (7) .

4. Ensemble selon l'une quelconque des revendications 1 à 3, sachant que la commande est configurée pour faire fonctionner le générateur (3) ou un des générateurs (3a ... 3n) selon la revendication 1 dans le mode motorisé, lorsque des consommateurs (18) sont alimentés en énergie électrique provenant du circuit intermédiaire de tension continue (7) et sachant que la commande (51) est configurée pour faire fonctionner ce faisant au moins un moteur de traction (17) dans un mode générateur de sorte que l'énergie requise par les consommateurs en provenance du circuit intermédiaire de tension continue (7) est injectée au moins en partie par le moteur de traction (17) au moins au nombre de un dans le circuit intermédiaire de tension continue (7) lorsqu'un critère prédéfini est rempli, qui correspond à un état de charge insuffisant du circuit intermédiaire de tension continue (7) doté d'un éventuel accumulateur d'énergie (CD, 38) présent raccordé audit circuit.

5. Ensemble selon la revendication précédente, sachant que la commande (51) présente un système de régulation de vitesse (53) ou est raccordée à ce dernier, sachant que le système de régulation de vitesse (53) est configuré pour réguler la vitesse de déplacement du véhicule correspondant à une prescription de vitesse (v_{S}), en fonction de cette dernière en ce que le moteur de traction (17) au moins au nombre de un fonctionne si besoin dans un mode générateur ou un mode motorisé, et sachant que le système de régulation de vitesse (53) est configuré pour autoriser, en dépit d'une prescription de vitesse constante dans le temps, selon une directive prédéfinie, une réduction de la vitesse de déplacement.

6. Ensemble selon l'une quelconque des revendications 1 à 5, sachant que la commande (51) ou une commande de moteur séparée du moteur à combustion interne (1) est configurée pour bloquer une amenée de carburant dans les chambres de combustion du carburant du moteur à combustion interne (1) lorsque le moteur à combustion interne (1) est entraîné par le générateur (3) dans un mode motorisé du générateur (3).

7. Ensemble selon la revendication précédente, sachant que la commande (51) ou la commande de moteur séparée du moteur à combustion interne (1) est configurée pour reprendre l'amenée de carburant dans les chambres de combustion du carburant lorsqu'un deuxième nombre de tours prédéfini se trouvant au-dessus du nombre de tours à marche à vide prédéfini ou au-dessus de la plage des nombres de tours à marche à vide prédéfinis est atteint.

8. Procédé servant à alimenter en énergie électrique des moteurs de traction (17) électriques dans un véhicule ferroviaire, sachant que :
- au moins un moteur à combustion interne (1) entraîne, dans un mode générateur, un générateur (3) associé au moteur à combustion interne (1), que le générateur (3) produit de l'énergie électrique, que l'énergie électrique produite est redressée et injectée dans un circuit intermédiaire de tension continue (7), depuis lequel le moteur de traction (17) au moins au nombre de un est alimenté en énergie de traction,
**caractérisé en ce**
- **que** le générateur (3) fournit de l'énergie électrique en provenance du circuit intermédiaire de tension continue (7) lorsque le générateur (3) se trouve dans un mode motorisé et entraîne le moteur à combustion interne (1),
- **que** lorsque le générateur (3) se trouve dans le mode motorisé, à réception d'un signal signalant qu'aucune puissance d'entraînement n'est exigée du moteur à combustion interne (1), le générateur (3) est commandé de telle manière que le moteur à combustion interne (1) est entraîné par le générateur (3) dans le cas d'un nombre de tours à marche à vide prédéfini ou dans le cas d'un nombre de tours à marche à vide dans une plage prédéfinie de nombres de tours à marche à vide,
sachant que la pluralité de moteurs à combustion interne (1a ... 1n) fonctionne, auxquels est couplé respectivement un générateur associé (3a ... 3n), qui est entraîné par le moteur à combustion interne (1a ... 1n) dans un mode générateur, et qui entraîne le moteur à combustion interne (1a ... 1n) associé dans un mode motorisé du générateur (3a ... 3n),
sachant qu'une partie des générateurs (3a ... 3n) fonctionnent dans un mode motorisé du générateur (3a ... 3n) lorsque l'ensemble comprenant plusieurs moteurs à combustion interne (1a ... 1n) fonctionne uniquement dans un mode à charge partielle de sorte qu'uniquement une partie des moteurs à combustion interne (1a ... 1n) produit de l'énergie mécanique et que les autres moteurs à combustion interne sont entraînés par le générateur (3a ... 3n) associé dans le cas d'un nombre de tours de marche à vide.

9. Procédé selon la revendication 8, sachant que les générateurs (3a ... 3n) fonctionnent dans le mode motorisé du générateur (3a ... 3n) lors d'un freinage du véhicule ferroviaire de sorte que les moteurs à combustion interne sont entraînés par le générateur (3a ... 3n) associé dans le cas d'un nombre de tours à marche à vide.

10. Procédé selon la revendication 8 ou 9, sachant que, lorsque des consommateurs électriques, qui sont présents en complément du moteur de traction (17) au moins au nombre de un, sont alimentés en énergie électrique en provenance du circuit intermédiaire de tension continue (7) par l'intermédiaire d'un raccordement électrique de consommateur (66), lorsque le générateur (3) ou les générateurs (3a ... 3n) selon la revendication 9 fonctionnent dans le mode motorisé et lorsqu'un critère prédéfini est rempli lequel correspond à un état de charge insuffisant du circuit intermédiaire de tension continue (7) doté d'un éventuel accumulateur d'énergie connecté audit circuit, le moteur de traction (17) au moins au nombre de un fonctionne dans un mode générateur de sorte que l'énergie requise par les consommateurs en provenance du circuit intermédiaire de tension continue (7) est injectée au moins en partie par le moteur de traction (17) au moins au nombre de un dans le circuit intermédiaire de tension continue (7).

11. Procédé selon la revendication précédente, sachant que la vitesse de déplacement du véhicule est ajustée par un système de régulation de vitesse (53), qui régule, en fonction d'une prescription de vitesse, la vitesse de déplacement, correspondante à la prescription, du véhicule, en ce que le moteur de traction (17) au moins au nombre de un fonctionne au besoin dans le mode générateur ou dans le mode motorisé, et sachant que le système de régulation de vitesse (53) est réalisé de telle manière qu'en dépit d'une prescription de vitesse constante dans le temps selon une directive prédéfinie, une réduction de la vitesse de déplacement est permise.

12. Procédé selon l'une quelconque des revendications 8 à 11, sachant qu'une amenée de carburant est bloquée dans les chambres de combustion du carburant du moteur à combustion interne (1), lorsque le moteur à combustion interne (1) est entraîné par le générateur (3) dans le mode motorisé du générateur (3).

13. Procédé selon la revendication précédente, sachant que l'amenée de carburant reprend dans les chambres de combustion de carburant, lorsqu'un deuxième nombre de tours prédéfini se trouvant au-dessus du nombre de tours à marche à vide prédéfini ou au-dessus de la plage des nombres de tours à marche à vide prédéfinis est atteint.
